Europäisches Patentamt

European Patent Office

Office européen des brevets

(19)

(11) Publication number: **0 204 345 B1**

(12) **EUROPEAN PATENT SPECIFICATION**

(45) Date of publication of patent specification: **16.10.91**    (51) Int. Cl.⁵: **G01D  5/26**

(21) Application number: **86107724.6**

(22) Date of filing: **06.06.86**

(54) **Device for fitting and adjusting an encoder.**

(30) Priority: **07.06.85 JP 124901/85**

(43) Date of publication of application:
   **10.12.86 Bulletin  86/50**

(45) Publication of the grant of the patent:
   **16.10.91 Bulletin  91/42**

(84) Designated Contracting States:
   **DE FR GB**

(56) References cited:
   **EP-A- 0 087 521**
   **DE-A- 2 033 425**
   **US-A- 4 077 657**
   **US-A- 4 345 149**
   **US-A- 4 470 698**

   **PATENT ABSTRACTS OF JAPAN, vol. 7, no.
   134 (P-203)[1279], 11th June 1983; JP-A-58 50
   403 (NIPPON DENSHIN DENWA KOSHA)
   24-03-1983**

(73) Proprietor: **DAINIPPON SCREEN MFG., CO.,
   LTD.**
   **1-1, Tenjinkitacho**
   **Horikawadoriteranouchiagaru-4-chome**
   **Kamikyo-ku Kyoto-shi Kyoto-fu(JP)**

(72) Inventor: **Wada, Yasuyuki**
   **2-8, 3-chome, Karasaki Naka**
   **Takatsuki Osaka(JP)**

(74) Representative: **Goddar, Heinz J., Dr. et al
   FORRESTER & BOEHMERT Widenmayer-
   strasse 4/I
   W-8000 München 22(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a device for adjustably fitting an encoder to the rotation shaft of a rotatable body, such as a scanning drum in a drum type image scanning and recording apparatus, such that the rotation shafts of both are aligned with respect to each other.

In a drum type image scanning and recording apparatus, a scanning drum on the peripheral surface of which an original picture is mounted and a recording drum on the peripheral surface of which a photosensitive material such as film is mounted are respectively rotated at a specified angular speed, and a reproduced image of said original picture is recorded either at full size or magnified size on said photosensitive material. For this purpose, the apparatus is usually equipped with timing signal generating means to control various timings during the recording of the reproduced image. One such timing signal generating means is a rotary encoder connected to each of the rotation shaft of the scanning drum on the original picture reading side and the recording drum on the recording side through a coupling adapted to the encoder. Accordingly, it is required for such coupling accurately to transmit the rotation of the rotation shaft of the drums to a shaft of the encoder.

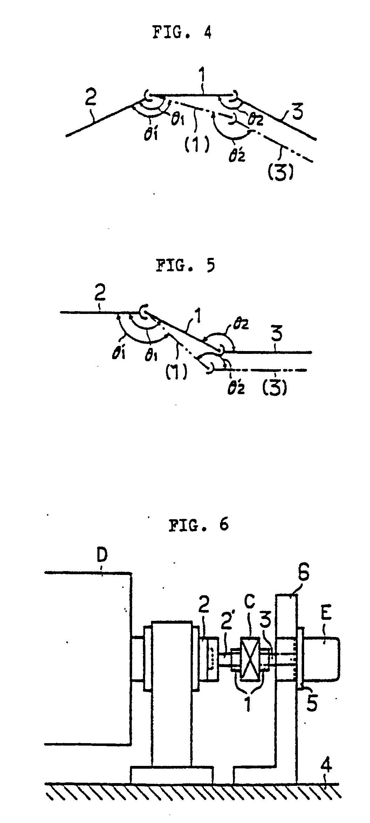

Generally, when coupling a drive shaft such as rotation shaft of the scanning drum to the rotation shaft of the encoder through a coupling, it is very difficult to connect the two rotation shafts coaxially because of the difficulty of achieving adequate machining accuracy of a supporting bracket, flanges, bearings, etc. Hence, a so-called diaphragm type coupling is widely used as a coupling which satisfies the aforementioned requirement even when both rotation shafts are not coaxial (i.e., a coupling enabling transmission of equal angular speed). With such a diaphragm coupling, even though the rotation shafts fo the drum and the encoder are not coaxial, transmission of an equal angular speed is possible, so far as it is established that the angles $\theta_1$ and $\theta_2$ which the axis of the coupling shaft 1 makes with the axis of each of the drum rotation shafts 2 and the encoder rotation shaft 3 in the same plane (the plane of the paper in this case) are equal to each other as shown in Figure 4 of the accompanying drawings. In such arrangement, however, if the encoder rotation shaft 3 is moved parallel to itself by a small amount in the same plane, as shown, for example, by the dot-chain lines in Figure 4, the resulting angles $\theta_1$, and $\theta_2$, are not equal ($\theta_1$, $\neq \theta_2$,) and the angular speed cannot be transmitted faithfully from the drum rotation shaft 2 to the encoder rotation shaft 3.

On the other hand, referring to Figue 5, if the drum rotation shaft 2 and the encoder rotation shaft 3 are set in parallel to each other in the same plane (the plane of the paper in this case), the angles between the axis of the coupling shaft 1 and the axes of the drum rotation shaft 2 and encoder rotation shaft 3 are maintained equal with $\theta_1 = \theta_2$ and $\theta_1, = \theta_2$, as shown by the two dot-chain lines in Figure 5, even when parallel movement occurs in the same plane, and the angular speed is accurately transmitted from the drum rotation shaft 2 to the encoder rotation shaft 3.

Heretofore, as shown in Figure 6, a fitting device for such an encoder comprises a bracket 6 which is fixed to a base 4 and by whcih an encoder E is supported at its flange portion in coaxial relationship to the rotation shaft 2 of a drum D. This fitting bracket 6 is fixed to the base 4 so that a surface against which the flange portion 5 abuts makes an exact right angle to the drum rotation shaft 2. A diaphragm type coupling C is coaxially connected to the drum rotation shaft 2 and fitted to a shaft end portion of an extended shaft 2' having the same diameter as the rotation shaft 3 of the encoder E and a shaft end portion of the encoder rotation shaft 3.

Accordingly, unless there is no error at all in the squareness between the fitting surface of the flange portion 5 of the encoder E and the rotation shaft 3 thereof, the aforementioned parallel relation is established between the drum rotation shaft 2, i.e., the extended shaft 2' and the encoder rotation shaft 3, and even when there is a small amount of offset between the shafts 2', 3, transmission of equal angular speed is effected from the drum rotation shaft 2 to the encoder rotation shaft 3.

The document JP-A-58-50403 discloses an adjusting mechanism for inclination, having two disks which disks have the same mass quantity and wedge shape on the same axis. The bottom surface of the first disk and the top surface of the second disk face one another, the disks being coupled with the axis which is vertically to the upper surface of the first disk at the center. The disks can be freely rotated. Therefore, when the thickest position of the first disk and the thinnest position of the second disk are aligned, the outer planes of the disk are in parallel. Conversely, when the thickest position of the first disk and the thickest position of the second disk are aligned with each other, the outer planes are inclined to the maximum. When the relationship between the relative rotary angle of the disks and the inclination is graduated on the periphery, any arbitrary inclination can be obtained. However, this adjusting mechanism is not suitable for fitting an encoder to a rotation shaft of a rotatable body, since there is no possibility to couple the two axes and to holding securely the inclination angle.

However, an equal angular speed is sometimes not transmitted as designed from the drum rotation

EP 0 204 345 B1

shaft 2 to the rotation shaft 3 of the encoder E fitted on the conventional encoder fitting device. As a result of investigations, it is found that the problem is caused by a slight angle error in the squareness between the fitting surface of the flange portion 5 of the encoder E and the rotation shaft 3 thereof. Such an error can be corrected by machining the fitting surface of the flange portion 5 using rotation shaft as a datum 3, but such correction is rather troublesome requiring much labour and time.

An object of the present invention is to provide an improved encoder fitting device in which troublesome correction by machining is replaced with a simple adjusting operation at the time of fitting an encoder, whereby a drum rotation shaft and an encoder rotation shaft are kept in parallel relation.

Accordingly, the present invention provides a device for adjustably fitting an encoder to the rotation shaft of a rotatable body through a coupling so that the encoder is rotated at the same angular speed as the rotation shaft, having the feature of patent claim 1. A preferred embodiment is subject-matter of subclaim 2.

Since an encoder fitting and adjusting device according to the invention is arranged as above, when the second and first inclined plates are fixed by appropriately rotating them so that an angle made between the axis of the rotation shaft of the rotatable body and a line normal to the encoder fitting surface may be equal to an inclination which is an error in a preliminary measured squareness between the fitting surface on the encoder and the rotation shaft thereof and that said inclination is offset at such position as said angle becomes equal to the inclination, the rotation shaft of the encoder is kept parallel to the rotation shaft of the rotatable body, and accordingly by connecting the rotation shafts together at their shaft end portions through a suitable coupling, rotation can be faithfully transmitted from the rotation shaft of the rotatable body to the rotation shaft of the encoder.

Thus, in the device for fitting and adjusting an encoder according to the invention, a slight deviation in the squareness between the flange surface for fitting the encoder and the rotation shaft thereof is substantially cancelled by rotating the annular inclined plates through a relatively large angle. This means an adjustment to keep the rotation shaft of the rotatable body and that of the encoder in parallel to each other can be quite easily performed, and hence an equal angular speed can be exactly transmitted from the rotation shaft of the body to that of the encoder by using a diaphragm type coupling, for example.

In order that the invention may be readily understood, an embodiment of the invention will now be described, by way of example, with reference to the accompanying drawings, in which:

Figure 1 is a sectional side view showing part of a device embodying the invention for fitting and adjusting an encoder;

Figure 2 is a partial plan view of a second annular inclined plate of the Figure 1 device;

Figure 3 is an explanatory view illustrating the principle of adjustment of the device embodying the invention;

Figures 4 and 5 are explanatory views showing typical relations between two rotation shafts joined together through a coupling shaft; and

Figure 6 is a side view of known fitting device.

Described hereinafter is a device embodying the invention in which a rotation shaft of a scanning drum and a rotation shaft of an encoder in a drum type image scanning and recording apparatus are joined together through a diaphragm type coupling.

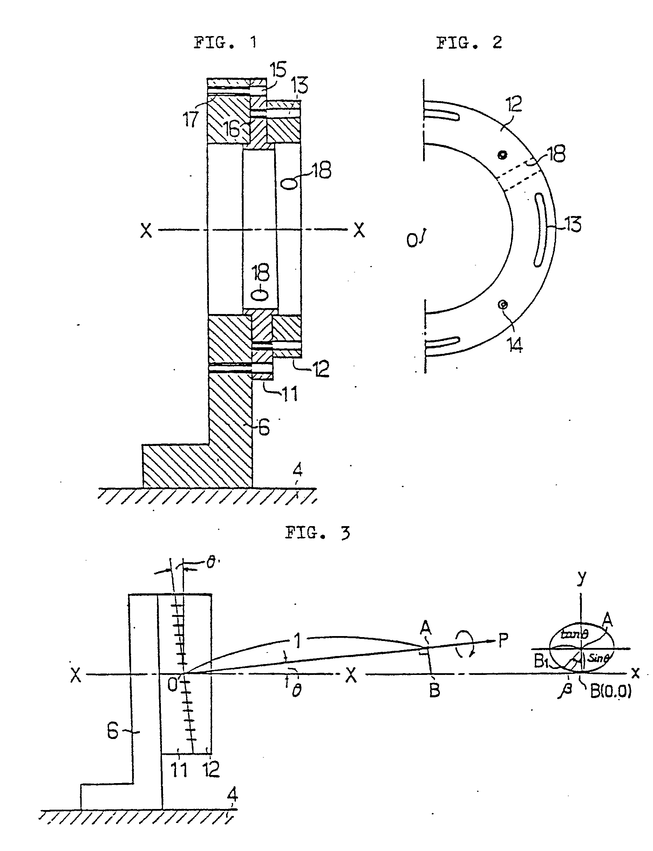

The device illustrated in Figure 1 comprises a conventional bracket 6 to which a first annular inclined plate 11 and a second annular inclined plate 12 are added. The contact surface between the first and second annular inclined plates 11, 12 is not orthogonal to the axis X-X of the drum rotation shaft 2 but is gently inclined at a slight angle $\theta$ ($\theta$ = 0.5° approximately for example) with respect to a surface which is orthogonal to the axis X-X as shown in Figure 3. Accordingly, in the normal condition illustrated, a contact surface between the first annular inclined plate 11 and the bracket 6 is kept parallel to a contact surface between the second annular inclined plate 12 and a flange portion 5 of said encoder (not shown in Figures 1 and 3), and both of these contact surfaces are orthogonal to the axis X-X of the drum rotation shaft 2.

The first annular inclined plate 11 has projecting hub portion, a lefthand portion being engaged with an inner peripheral surface of the bracket 6 and a righthand portion with the second annular inclined plate 12. As shown in Figure 2, a plurality of arcuate slots 13 for receiving set bolts are formed (for example, 4 slots) in the second annular inclined plate 12 to contact it with rotatable adjustment to the first annular inclined plate 11, and tapped holes 14 are formed in the intermediate points between adjacent slots 13 for fitting the encoder E. Further, although not illustrated in a plan view, a plurality of arcuate slots 15 (4 slots, for example) are correspondingly formed in the first annular inclined plate 11 for set bolts to connect it with rotatable adjustment to the bracket 6. A plurality of tapped holes 16 (12 holes, for example) for the set bolts are formed in the first plate 11 at a radial distance corresponding to the arcuate slots formed in the second annular inclined plate 12. A plurality of topped holes 17 for the set bolts are formed in the bracket 6 in correspondence with the arcuate slots 15 formed in the first annular inclined plate 11.

Accordingly, with the first annular inclined plate 11 fixed to the fitting bracket 6 by the set bolts and the set bolts between the first and second plates 11 and 12 slackened off, the second annular plate 12 can be turned to a required position by a turning rod inserted in a radially extending through hole 18 in the second annular inclined plate 12, and the second annular inclined plate 12 then fixed in the required position to the first annular inclined plate 11 by tightening the set bolts. Such adjustment can be applied in substantially the same manner when fixing the first annular inclined plate 11 to the fitting bracket 6.

Operation of the device is as follows.

First, the angle made between the rotation shaft 3 of the encoder E and the fitting surface of the flange portion 5, i.e. the inclination $\phi$ between the axis of the rotation shaft 3 and the line normal to the said fitting surface is measured.

Then, with the set bolts for fixing the first annular inclined plate 11 to the bracket 6 is slackened off, the first annular inclined plate 11 is rotated so as to be in a range of angles for which correction is possible by rotation of the second annular inclined plane 12 alone. Then, by turning the second annular inclined plate 12, the second annular inclined plate 12 is fixed to the first plate 11, by the set bolts at an adjusted angular position in which the angle made between the line normal to the surface for fitting the flange portion 5 of the encoder E and the axis X-X of said drum rotation shaft 2 is equal to said inclination $\phi$.

When the encoder E is fixed with its flange portion 5 abutting the second annular inclined plate 12 arranged as above, since the rotation shaft 3 of the encoder E is in parallel to the rotation shaft 2 of the drum D, rotation of an equal angular speed is exactly transmitted from the drum rotation shaft 2 to the encoder rotation shaft 3 when the shaft end surface of the extended shaft 2' of the rotation shaft 2 is connected to that of the rotation shaft 3.

In the case of rotation the second annular inclined plate 12 alone from the normal state shown in Figure 1, a relation between the inclination $\phi$ made between the axis X-X and the line normal to the encoder fitting surface and a rotation angle $\beta$ can be calculated by the following procedure. By graduating such relation on the contact surface area of the first and second annular inclined surfaces as shown in Figure 3 to form a scale, the encoder fitting operation can be carried out more easily using the scale.

Described hereunder is a process for calculating the relation between the inclination $\phi$ and the rotation angle $\beta$.

Referring to Figure 3, a normal line $\overline{OP}$ is drawn from the centre 0 of the first annular inclined plate 11. The angle made between the axis X-X of the drum rotation shaft 2 and the normal line $\overline{OP}$ is equal to the inclination $\theta$ of the contact surface between the first and second annular inclined plates 11, 12. Then a point A is established on the normal line $\overline{OP}$ which is distant from the point 0 by an unit length 1, and a point B is further established at an intersection point of a line perpendicular to the normal line $\overline{OP}$ with the axis X-X.

The second annular inclined plate 12 is turned clockwise through $\beta°$ on the normal line $\overline{OP}$ as indicated by the arrow. Considering that the point B moves to a point $B_1$ as a result of such movement and establishing this point B as the origin (O, O,) in the shown coordinates (x, y), the coordinates $(x_1, y_1)$ of the point $B_1$ can be expressed as follows:

$$x_1 = \tan \theta . \sin \beta$$

$$y_1 = \sin \theta - \sin \theta . \cos \beta = \sin \theta (1 - \cos \beta)$$

And $\overline{BB_1} = (x_1^2 + y_1^2)^{\frac{1}{2}}$ is obtained.

Further, establishing the inclination $\phi$ made between the line $OB_1$ and the axis X-X, the following expression is obtained:

$$\phi = \sin^{-1} \left( \frac{\overline{BB_1}}{1/\cos \Theta} \right) = \sin^{-1} (\overline{BB_1} . \cos \Theta)$$

Since the inclination $\theta$ of the contact surface between the first and second annular inclined surfaces 11, 12 is known (0.5°, for example), it is possible to obtain the inclination $\phi$ made between the normal line on the second annular inclined plate 12 and the axis X-X when the second plate 12 is turned by $\beta°$ with respect to the first annular inclined plate 11.

In this manner, the inclination $\phi$ produced when turning the $\beta$ every 2° or 5° is calculated and graduated

4

EP 0 204 345 B1

in the contact area of the inclined plates 11, 12.

It is also possible to compile a table of the relation between $\phi$ and $\beta$ to use for the adjustment.

While, a diaphragm type coupling is used to couple the encoder to the rotation shaft in the above described embodiment, the coupling could take other equivalent forms, such as an arrangement using two universal joints (hook joint) through an intermediate shaft or equal speed ball joints.

The features disclosed in the foregoing description, in the following claims and/or in the accompanying drawings may, both separately and in any combination thereof, be material for realising the invention in diverse forms thereof.

## Claims

1. A device for adjustably fitting an encoder to the rotating shaft of a rotatable body such that the rotation shafts of both are aligned with respect to each other, comprising:

   support means (6) having at least one planar surface and having a through hole through said surface;

   a first annular plate (11) secured to the support means (6) such that it is rotatable about its axis which is perpendicular to the plane of contact formed by the first surface of the plate and the planar surface of the support means (6), the second surface of the first plate (11) being slightly inclined with respect to the first;

   a second annular plate (12) secured to the first annular plate (11) such that it is rotatable about its axis which is perpendicular to the plane of contact formed by the second surface of the first plate (11) and the first surface of the second plate (12), having a second surface which is slightly inclined with respect to its first surface and to which the flange portion of the encoder (E) is to be secured in use;

   the second plate (12) being secured to the first plate (11) and the first plate (11) being secured to the support means (6) by means of a plurality of set bolts protruding through arcuate slots (15) in the relevant plates into corresponding tapped holes (17) in the first plate (11), respectively support means (6), thereby allowing said rotation of the relevant plates, and such that the holes of the support means (6) and the apertures of both annular plates (11, 12) are arranged such that in use the rotation shaft (3) of the encoder (E) will extend through the plates (11, 12) and the support means (6) to couple via coupling means (C) with the rotation shaft (2) of the rotating body (D);

   means provided on at least one of the annular plates (11, 12) for rotating that plate through an angle with respect to the other plate such that the inclination of the second surface of the second plate (12) with respect to the plane of contact between support means and the first plate may be varied.

2. Device as claimed in claim 1, characterized in that said means for turning relatively said first annular plate (11) and said second annular plate (12) around the axis of said rotation shaft (2) of the rotating body is a turning rod inserted in a radially extending through hole (18) in the second annular plate (12).

## Revendications

1. Dispositif pour fixer de façon réglable un encodeur sur l'arbre de rotation d'un corps rotatif de telle sorte que les arbres de rotation des deux sont alignés l'un par rapport à l'autre, comportant :
   des moyens de support (6) ayant au moins une surface plane et ayant un trou débouchant à travers la dite surface;
   un premier plateau annulaire (11) fixé au moyens de support (6) de telle sorte qu'il peut tourner autour de son axe qui est perpendiculaire au plan de contact formé par la première surface du plateau et la surface plane des moyens de support (6), la deuxième surface du premier plateau (11) étant légèrement inclinée par rapport à la première;
   un deuxième plateau annulaire (12) fixé sur le premier plateau annulaire (11) de telle sorte que qu'il peut tourner autour de son axe qui est perpendiculaire au plan de contact formé par la deuxième surface du premier plateau (11) et la première surface du deuxième plateau (12), en ayant la deuxième surface qui est légèrement inclinée par rapport à la première surface et à laquelle la partie de bride de l'encodeur (E) doit être fixée lors de l'utilisation;
   le deuxième plateau (12) étant fixé au premier plateau (11) et le premier plateau (11) étant fixé aux

5

moyens de support (6) à l'aide de plusieurs boulons dépassant de fentes courbes (15) dans les plateaux concernés dans des trous taraudés correspondants (17) respectivement dans le premier plateau (11) et les moyens de support (6), permettant ainsi la dite rotation des plateaux concernés, et de telle sorte que les trous des moyens de support (6) et les ouvertures des deux plateaux annulaires (11, 12) sont disposés de telle sorte que, lors de l'utilisation, l'arbre de rotation (3) de l'encodeur (E) s'étend à travers les plateaux (11, 12) et les moyens de support (6) afin d'être couplé par des moyens d'accouplement (C) à l'arbre de rotation (2) du corps rotatif (D);
des moyens prévus sur au moins l'un des plateaux annulaires (11, 12) afin de faire tourner ce plateau d'un angle par rapport à l'autre plateau de telle sorte que l'inclinaison de la deuxième surface du deuxième plateau (12) par rapport au plan de contact entre les moyens de support et le premier plateau peut être modifiée.

2. Dispositif selon la revendication 1, caractérisé en ce que les dits moyens destinés à faire tourner de manière relative le dit premier plateau annulaire (11) et le dit deuxième plateau annulaire (12) autour de l'axe du dit arbre de rotation (2) du corps rotatif est une tige de manoeuvre en rotation insérée dans un trou débouchant s'étendant radicalement (18) dans le deuxième plateau annulaire (12).

## Patentansprüche

1. Vorrichtung zum einstellbaren Befestigen eines Codierers an der drehbaren Welle eines drehbaren Körpers, so daß die Drehwellen beider in bezug aufeinander ausgerichtet sind, mit:

   einer Trägereinrichtung (6) mit wenigstens einer planaren Oberfläche und mit einem Durchgangsloch durch die Oberfläche;

   einer ersten ringförmigen Platte (11), die so an der Trägereinrichtung (6) befestigt ist, daß sie um ihre Achse drehbar ist, welche senkrecht zur Kontaktebene liegt, die von der ersten Oberfläche der Platte und der planaren Oberfläche der Trägereinrichtung (6) gebildet ist, wobei die zweite Oberfläche der ersten Platte (11) leicht in bezug auf die erste geneigt ist;

   einer zweiten ringförmigen Platte (2), die an der ersten ringförmigen Platte (11) so befestigt ist, daß sie um seine Achse drehbar ist, welche senkrecht zu der Kontaktebene liegt, die von der zweiten Oberfläche der ersten Platte (11) und der ersten Oberfläche der zweiten Platte (12) gebildet ist, mit einer zweiten Oberfläche, die leicht in bezug auf ihre erste Oberfläche geneigt ist und an der der Flanschabschnitt des Codierers (E) bei der Verwendung befestigt wird;

   wobei die zweite Platte (12) an der ersten Platte (11) und die erste Platte (11) an der Trägereinrichtung (6) mittels einer Vielzahl von Druckbolzen befestigt ist, die sich durch gekrümmte Schlitze (15) in den relevanten Platten in entsprechende Gewindelöcher (17) in der ersten Platte (11) beziehungsweise der Trägereinrichtung (6) erstrecken, so daß sie die Drehung der relevanten Platten ermöglichen und so, daß die Löcher der Trägereinrichtung (6) und die Öffnungen beider ringförmigen Platten (11, 12) so angeordnet sind, daß bei der Verwendung die Drehwelle (3) des Codierers (E) sich durch die Platten (11, 12) und die Trägereinrichtung (6) erstreckt, um über eine Kopplungseinrichtung (C) mit der Drehwelle (2) des drehbaren Körpers (D) einzukoppeln;

   einer Einrichtung, die auf wenigstens einer der ringförmigen Platten (11, 12) zum Drehen der Platte um einen Winkel in bezug auf die andere Platte vorgesehen ist, so daß die Neigung der zweiten Oberfläche der zweiten Platte (12) in bezug auf die Kontaktebene zwischen der Trägereinrichtung und der ersten Platte geändert werden kann.

2. Vorrichtung nach Anspruch 1, dadurch gekennzeichnet, daß die Einrichtung zum relativen Drehen der ersten ringförmigen Platte (11) und der zweiten ringförmigen Platte (12) um die Achse der Drehwelle (2) des Drehkörpers eine Drehstange ist, welche in ein sich radial erstreckendes Durchgangsloch (18) in der zweiten ringförmigen Platte (12) eingefügt ist.

FIG. 1

FIG. 2

FIG. 3

FIG. 4

FIG. 5

FIG. 6